# EUROPEAN PATENT APPLICATION

(11) **EP 4 715 626 A1**
(43) Date of publication of application: **25.03.2026**
(21) Application number: 25202355.1
(22) Date of filing: 16.09.2025
(51) Int. Cl.: G06F 16/2455

(54) **CLOUD DATABASE MANAGEMENT SYSTEM WITH TABLE INHERITANCE**

(30) Priority: 18.09.2024 US 202418888745
(71) Applicant: SAP SE, 69190 Walldorf (DE)
(72) Inventor: Zimmermann, Andreas, Walldorf (DE); Boehm, Alexander, Walldorf (DE); Kim, Ki Hong, Walldorf (DE)
(74) Representative: Müller-Boré & Partner Patentanwälte PartG mbB

(57) **Abstract**

Various examples are directed to systems and methods of managing a database in a multi-tenant cloud environment. A database management application may receive a first query directed to a first table. The first query may be received from a cloud application associated with a first tenant of the multi-tenant cloud environment. The database management application may access a first shared table associated with the first table and stored at a common storage of the multi-tenant cloud environment and a first tenant delta table associated with the first table and stored at a tenant data storage. The database management application may generate a first query response based at least in part on the first query, the first shared table and the first tenant delta table.

## Description

### BACKGROUND

A database management application can be implemented as part of a suite of software applications that execute together. For example, the database management application may support various client processes that utilize the database management application to manage data. In some examples, a database management application is implemented with a suite of processes that implement an enterprise resource planning (ERP) software solution. An ERP software solution may include one or more ERP applications. The ERP applications execute in conjunction with the database management application to manage various different aspects of business operations. An example ERP software solution is the S/4 HANA product available from SAP SE of Walldorf, Germany.

### BRIEF DESCRIPTION OF DRAWINGS

The present disclosure is illustrated by way of example and not limitation in the following figures.
FIG. 1 is a diagram showing one example of an environment for executing a database management application utilizing table inheritance.
FIG. 2 is a diagram showing an example arrangement of the environment of FIG. 1 illustrating table inheritance.
FIG. 3 is a diagram showing an example arrangement of the environment of FIG. 1 implementing table inheritance for three example categories of logical tables.
FIG. 4 is a diagram showing another example of the arrangement of FIG. 3 with a constant false view replaced with a tenant-specific table.
FIG. 5 is a flowchart showing one example of a process flow that may be executed in the arrangement to handle a query from the application layer.
FIG. 6 is a flowchart showing one example of a process flow that may be executed by a database management application to respond to a query directed to a logical table represented using table inheritance.
FIG. 7 is a flowchart showing one example of a process flow that may be executed by a database management application to respond to a query including a write request directed to a logical table managed using table inheritance.
FIG. 8 is a flowchart showing one example of a process flow that may be executed by a database management application to implement table inheritance.
FIG. 9 is a flowchart showing one example of a process flow that may be executed to restore a tenant storage including one or more tenant delta tables.
FIG. 10 is a diagram showing one example of a cloud environment demonstration a single shared table that is associated with corresponding tenant delta tables at different respective tenants.
FIG. 11 is a diagram illustrating an example of in-memory database management system that may be used to implement table privilege management, for example, as described herein.
FIG. 12 is a diagram illustrating an example of an index server of the in-memory database management system of FIG. 11.
FIG. 13 is a diagram illustrating one example of the request processing and execution control of the database management system of FIG. 12.
FIG. 14 is a block diagram showing one example of an architecture for a computing device.
FIG. 15 is a block diagram of a machine in the example form of a computer system within which instructions may be executed for causing the machine to perform any one or more of the methodologies discussed herein.

### DETAILED DESCRIPTION

Enterprise resource planning (ERP) applications generate and utilize the data managed by one or more database management applications to perform different enterprise operations. For example, an ERP application supporting a human resources operation may store employee records at the database management application. The human resources ERP application may perform various tasks such as, for example, managing payroll, benefits, and/or the like. An example ERP application supporting accounting may use records managed by the database management application to perform various accounting-related tasks such as posting transactions, reconciling accounts, and/or the like. An ERP application supporting operations may manage and generate various purchase orders, shipping orders, and/or the like to manage manufacturing or other operations.

ERP applications may utilize tables at the database management application to store various enterprise data. For example, tables at the database management application may be divided into rows and columns. Each row of a table may be referred to as a record. Each record may have multiple fields, where each field of a record corresponds to a column of the table including the record. Consider the example human resources ERP application described above. Such an ERP application may utilize an example employee table at the database management application having records corresponding to employees and columns/fields corresponding to employee attributes such as, name, address, position, salary, and/or the like. Fields of a record may be filled or unfilled. A field of a record is filled if the field includes data. The field of a record is unfilled if the field does not contain data or if the field contends nonce or placeholder data.

In some examples, ERP applications are executed in a multi-tenant cloud environment, such as a public cloud environment. In a public cloud environment, a software provider enterprise implements instances of the ERP application and/or database management application at computing hardware provided by a cloud hyperscaler. The public cloud environment is divided into a number of tenancies. Customer enterprises may hold one or more tenancies. Users associated with a customer enterprise may access the public cloud environment to use the ERP application or applications associated with the tenancy or tenancies of that customer enterprise.

Many ERP applications are provided with a large quantity of base or default data. Base data may include, for example, commonly used business configurations, support for multiple languages, terms used in various user interfaces and data classifications, accounting templates, default content, application code for executing the ERP applications, and/or the like. The base data can be provided, for example, at one or more tables of the database management application. In some examples, the base data also includes empty tables that are configured to be filled with user data provided by the customer enterprise.

In some examples, the size of the base data can be quite large. For example, the S/4 HANA product available from SAP SE of Walldorf, Germany can sometimes ship with tens of thousands of tables populated with about 100 or more GB of data. In some examples, empty tables alone can consume multiple gigabytes of storage. Also, when an in-memory database management application is used, such as HANA, significant portions of the default data are not only stored at persistent storage, but also loaded to random access memory (RAM).

The large quantity of base data associated with some ERP applications increases the cost of executing the ERP applications. For example, each tenancy in a public cloud environment may utilize tens of gigabytes of persistent storage (and sometimes RAM storage) before the customer enterprise stores a single record. This leads not only to inefficient use of hardware resources, it also increases the costs of providing the ERP applications. In some examples, hardware inefficiencies and cost inefficiencies may be particularly felt at customer enterprise on-boarding. For example, the significant hardware resources necessary to on-board a new customer enterprise may make entry-level ERP solutions cost prohibitive for many potential customer enterprises.

Some examples utilize a copy-on-write arrangement to reduce duplicate base data storage in a cloud environment. In a copy-on-write arrangement, base data application is written to a common storage at the public cloud environment. The common storage may be, for example, a tenancy maintained by the developer enterprise. Other tenancies at the public cloud environment reference the base data stored at the common storage. This may reduce resource usage at the various customer enterprise tenancies because those tenancies may not store all of the base data.

In many ERP applications, however, it is desirable to permit customer enterprises to modify some or all of the base data. For example, a customer enterprise may utilize a language that is not supported by the base data. Also, for example, the customer enterprise may utilize accounting techniques that are not reflected by accounting templates that are part of the base data. In a copy-on-right arrangement, base data is stored at the common storage and is accessible to individual customer enterprise tenancies. When a customer enterprise (a user associated with the customer enterprise) modifies the base data, the table or tables that are modified are copied to the customer enterprise tenancy. Further read or write queries to the modified table are directed to the local table at the customer enterprise tenancy instead of to the shared table at the common storage.

Although this arrangement may mitigate some data storage usage of the ERP applications, challenges may remain. For one, the arrangement may still result in significant duplication of data storage. For example, small modifications to base data tables can result in very large quantities of data being transferred to the customer enterprise tenancies. If a customer enterprise makes relatively small modifications to a large number of tables, the data storage requirements for the customer tenancy may still be quite large, with significant redundancies between the customer enterprise tenancy and the customer data storage.

Also, a copy-on-write arrangement may be implemented at the application layer (e.g., by the ERP applications themselves and not by the database management application). For example, the application layer may be configured to track whether a particular table from the base data has been modified. If the ERP application has not modified the table, the application layer directs the database management application to access the unmodified version of the table stored at the common storage. If the ERP application has previously modified the table, then the application layer directs the database management application to access the version of the table stored locally at the tenancy. Because this arrangement involves changes to the application layer, it can increase the complexity and reduce the efficiency of the ERP applications.

Various examples address these and other challenges utilizing a table inheritance arrangement. According to a table inheritance arrangement, a logical table may be represented by a shared table at a common storage and by one or more tenant delta tables that may be stored at different tenancies. The shared table comprises the initial content of the logical table. For example, the shared table may include base data. The tenant delta tables may store tenant-specific modifications to the shared table. When a user associated with a tenant directs a query to the table, the database management application may execute the query against the shared table and/or against the combination of the shared table and the tenant delta table. In this way, redundant data storage may be reduced. Also, because the functionality for implementing table inheritance may be implemented at the database management application, it may simplify the ERP application layer.

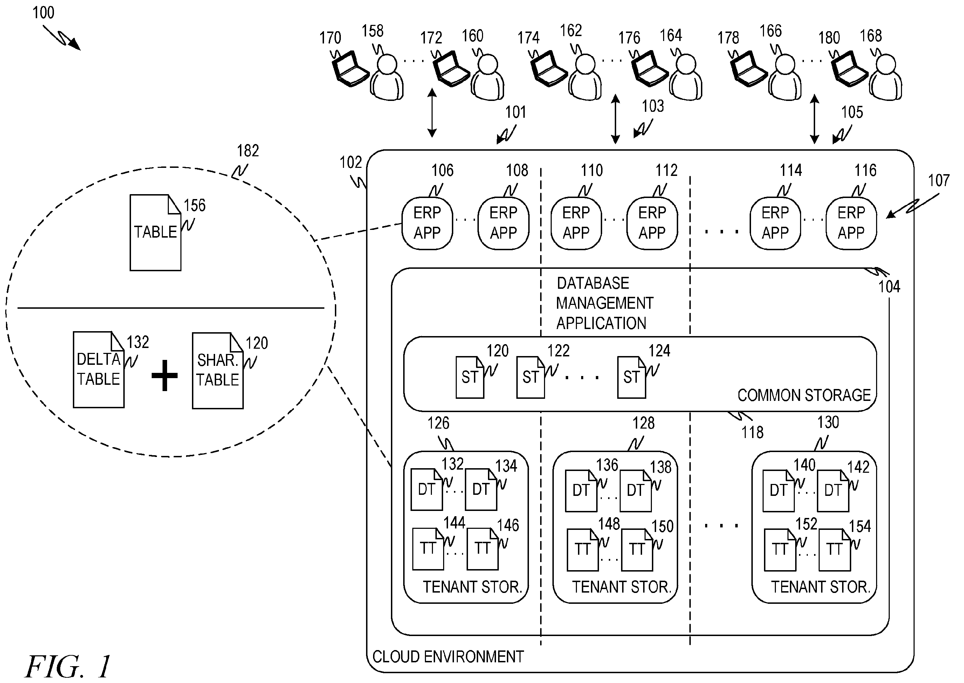

FIG. 1 is a diagram showing one example of an environment 100 for executing a database management application 104 utilizing table inheritance. The environment 100 comprises a cloud environment 102. The cloud environment 102 comprises tenancies 101, 103, 105. The cloud environment 102 also executes a database management application 104, which may execute in an utilize the resources of an additional tenancy of the public cloud environment 102.

Each tenancy 101, 103, 105 executes one or more ERP applications 106, 108, 110, 112, 114, 116. The ERP applications may be or include any suitable ERP application such as, for example, an operations management application, a human resources application, an accounting application, and/or the like. Example ERP applications include an analytics software solution such as the SAP^{®} Analytics Cloud application available from SAP SE of Walldorf, Germany, a human capital management software solution such as SAP SuccessFactors^{®}, also available from SAP SE of Walldorf, Germany, a project management software solution such as SAP Portfolio and Project Management (PaPM), also available from SAP SE of Walldorf, Germany.

Each tenancy 101, 103, 105 also comprises respective tenant storage 126, 128, 130. Tenant storage 128, 126, 130 for the respective tenancies 101, 103, 105 can include persistent storage and/or RAM storage for storing data that is specific to a particular tenancy 101, 103, 105. Tenant storages 128, 126, 130 are shown being managed by the same database management application 104 that manages the common storage 118. In some examples, different storages may be managed by different database management applications executing at the cloud environment 102.

Users 158, 160, 162, 164, 166, 168 may access the cloud environment 102 to use the ERP applications 106, 108, 110, 112, 114, 116. In some examples, users 158, 160, 162, 164, 166, 168 access the cloud environment 102 with user computing devices 170, 172, 174, 176, 178, 180. The user computing devices 170, 172, 174, 176, 178, 180 may be any suitable computing device such as, for example, a mobile computing device, a laptop computing device, a desktop computing device, and/or the like.

Different users 158, 160, 162, 164, 166, 168 may be associated with different tenancies 101, 103. For example, users 158, 160 may be associated with the tenancy 101 and may utilize ERP applications 106, 108 executing at the tenancy 101. Users 158, 160, in some examples, are employees or otherwise associated with the customer enterprise of the tenancy 101. Also, in the example of FIG. 1, users 162, 164 are associated with the tenancy 103 and users 166, 168 are associated with the tenancy 105. Although FIG. 1 shows three tenancies 101, 103, 105 and two users 158, 160, 162, 164, 166, 168 per tenancy, it will be appreciated that additional tenancies may be supported and that some tenancies will have different numbers of users, including more than two users.

In the example of FIG. 1, the cloud environment 102 also executes the database management application 104. The database management application 104, in some examples, executes at a tenancy different than the tenancies 101, 103, 105 associated with customer enterprises. Accordingly, the database management application 104 may utilize hardware resources, including common storage 118. The common storage 118 may comprise persistent and/or memory storage that may be utilized by the database management application 104 and, in some examples, may also be accessible to the various tenancies 101, 103, 105.

In addition to the shared tables 120, 122, 124, the database management application may also manage tables at the respective tenant storages 126, 128, 130. For example, the database management application 104 may manage tenant tables 144, 146, 148, 150, 152, 154. Tenant tables 144, 146, 148, 150, 152, 154 may be tables generated by the respective tenants and storing data provided by the respective tenants. For example, tenant tables 144, 146, 148, 150, 152, 154 may not be common between tenants. Tenant storage 126, 128, 130 may also comprise tenant delta tables 132, 134, 136, 138, 140, 142, described in more detail herein.

The database management application 104 may be arranged to implement table inheritance. According to table inheritance, the database management application makes a set of logical tables available to the ERP applications 106, 108, 110, 112, 114, 116 using a set of shared tables 120, 122, 124 at the common storage 118 and corresponding tenant delta tables 132, 134, 136, 138, 140, 142 stored at respective tenant storage is 126, 128, 130. The set of shared tables 120, 122, 124 may comprise base data for the respective ERP applications 106, 108, 110, 112, 114, 116, for example, as described herein. The database management application 104 may arrange the shared tables 120, 122, 124 such that the shared tables 120, 122, 124 are read-only.

The respective tenant delta tables 132, 134, 136, 138, 140, 142 may store tenant-specific modifications made to the logical tables relative to the corresponding shared tables 120, 122, 124 at the common storage 118. The database management application 104 may respond to queries directed to the logical tables using the shared table 120, 122, 124 corresponding to a logical table and the tenant delta table 132, 134, 136, 138, 140, 142 corresponding to the logical table and to the tenant originating the query.

An example of this concept is illustrated by breakout window 182, which is illustrated from the perspective of an application layer 107 (e.g., one of the ERP applications 106, 108 for the tenancy 101). In this example, the application layer 107 can query a logical table 156 that corresponds to the shared table 120 and the tenant delta table 132. Queries to the logical table 156 are handled by the database management application 104 utilizing the shared table 120 and the tenant delta table 132. In this way, the operations of the database management application 104 relative to the tenant delta tables 132, 134, 136, 138, 140, 142 and shared tables 120, 122, 124 may be transparent to the application layer 107.

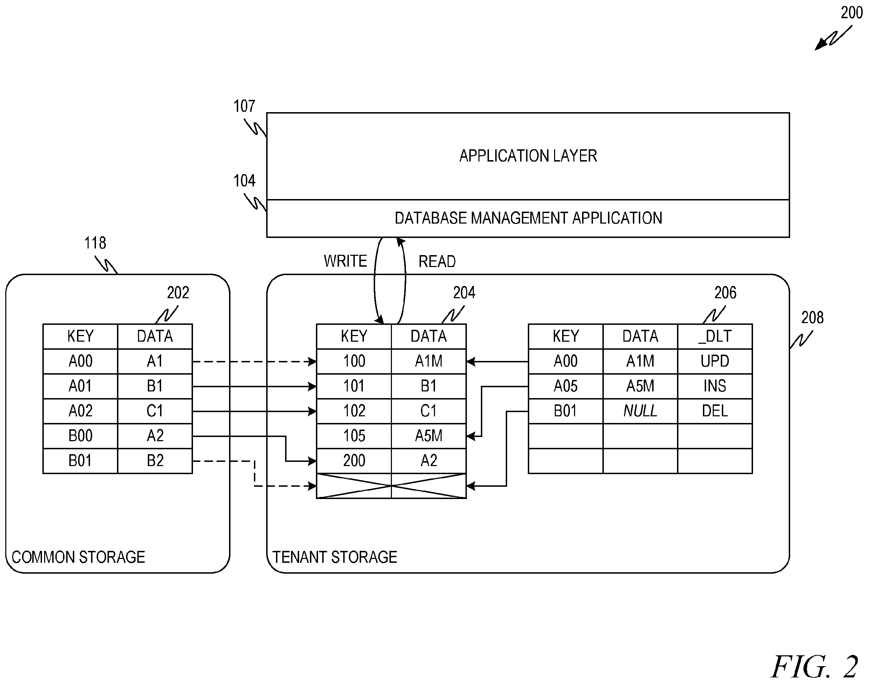

FIG. 2 is a diagram showing an example arrangement 200 of the environment 100 illustrating table inheritance. The arrangement 200 shows the application layer 107 and database management application 104 in communication with the common storage 118 and a tenant storage 208. The tenant storage 208 may be one of the tenant storages 126, 128, 130 or a different tenant storage. The database management application 104 utilizes a shared table 202, stored at the common storage 118, and a corresponding tenant delta table 206, stored at the tenant storage 208, to provide the application layer 107 with access to a logical table 204. For example, queries by the application layer 107 (e.g. originating from the tenancy associated with the tenant storage 208) are applied against the logical table 204.

In various examples, the tenant delta table 206 has a schema that is based on the schema of the shared table 202. For example, the tenant delta table 206 may comprise the same columns as the shared table 202 plus an additional status column. In the example of FIG. 2, the shared table 202 comprises two columns, a first column labeled "KEY" and a second column labeled "DATA." The tenant delta table 206 comprises corresponding columns labeled "KEY" and "DATA" as well as a status column, which is labeled "_DLT" in FIG. 2.

Records in the tenant delta table 206 represent changes to the shared table 202. For example, record fields at the tenant delta table 206 corresponding to columns that are in common with the shared table 202 may include data making up a record in the same schema as the shared table 202. Record fields at the tenant delta table 206 in the status column described a change to the shared table 202 associated with the record.

The database management application 104 may use the shared table 202 and the tenant delta table 206 to respond to queries from the application layer 107 that are directed to the logical table 204. For example, the database management application 104 may construct all or a portion of the logical table 204 using the shared table 202 and the tenant delta table 206. The database management application 104 may start with the shared table 202. For each record at the tenant delta table 206, the database management application 104 may apply the change indicated at the status column. In the example of FIG. 2, the first record at the tenant delta table indicates the record at the shared table 202 having the key A00 and provides data A1M. The status field indicates update. Accordingly, the logical table 204 may replace the key A00 at the shared table 202 with the corresponding record indicated by the key A00 at the tenant delta table. In the example of FIG. 2, the second record at the tenant delta table 206 includes a key A05 that does not correspond to any key at the shared table 202. The status field indicates insert. Accordingly, the database management application 104 may insert a record into the logical table 204 including the key A05 and the corresponding data A5M from the tenant delta table 206. In the example of FIG. 2, the third record at the tenant delta table 206 references a key B01 that is present at the shared table 202. The status field indicates delete. Accordingly, the database management application 104 may omit the record having the key B01 from the logical table 204.

In some examples, the shared table 202 may be transparent to the application layer 107. For example, the application layer 107 may be configured to interface with the logical table 204. Accordingly, the application layer 107 may be configured to direct read and/or write queries to the logical table 204. The database management application 104 may translate queries directed to the logical table 204 into queries that can be answered using a combination of the shared table 202 and the tenant delta table 206.

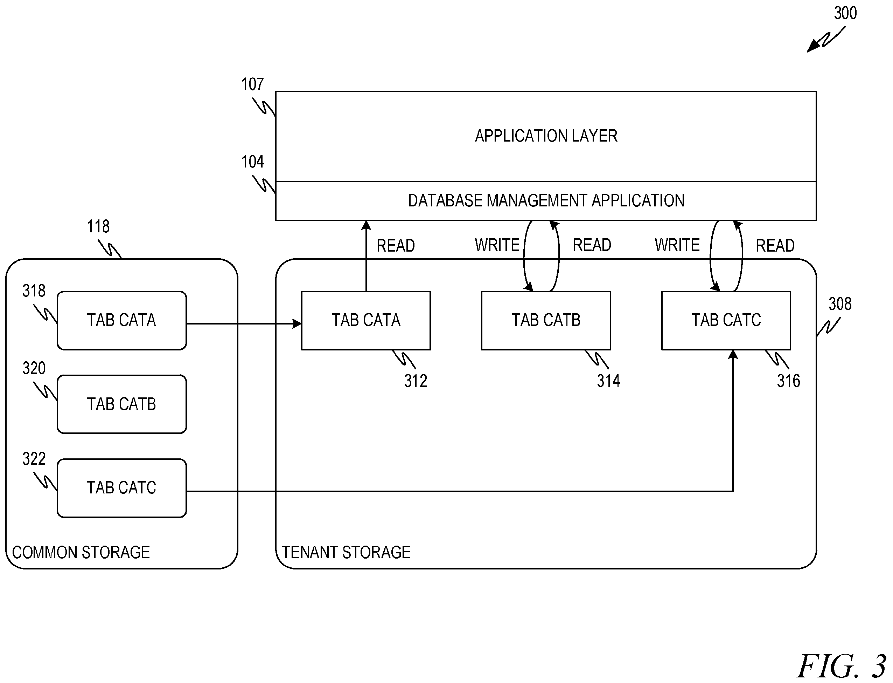

FIG. 3 is a diagram showing an example arrangement 300 of the environment 100 implementing table inheritance for three example categories of logical tables. The arrangement 300 also comprises the application layer 107 and the database management application 104 as well as the common storage 118. A tenant storage 308 may be one of the tenant storages 126, 128, 130, or a different tenant storage. In the example of FIG. 3, there are three categories of logical tables.

A first category of logical tables includes tables that are read-only for all tenants. A shared table 318 at the common storage 118 corresponds to a read-only logical table. The database management application 104 may be configured to represent the read-only logical table corresponding to the shared table 318 as a projection view 312 of the shared table 318. The projection view 312 may be accessible to the application layer 107. The database management application 104 may be programmed to deny requests from the application layer 107 to modify the projection view 312.

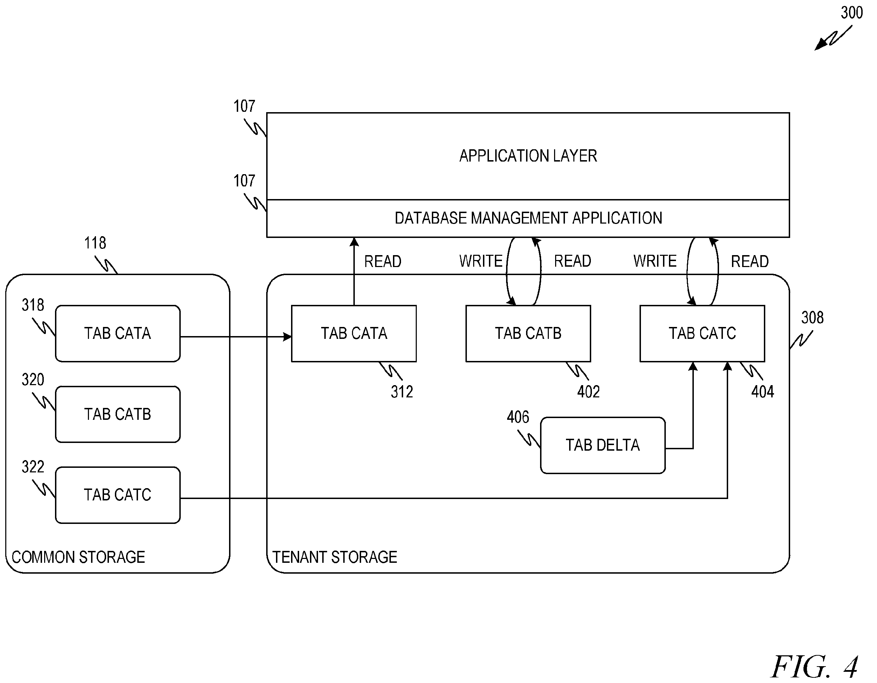

A second category of logical tables includes logical tables that are initially empty, but are filled with data from the users of a customer tenant. A shared table 320 at the common storage 118 represents a logical table in this category. Initially, the database management application 104 represents the logical table using a constant false view 314 of the shared table 320. When a user (via the application layer 107) attempts to write to the constant false view 314, the database management application 104 replaces the constant false view 314 with a tenant-specific table 402. FIG. 4 is a diagram showing another example of the arrangement 300 with the constant false view 314 replaced with a tenant-specific table 402. The tenant specific table 402 is a representation of the logical table that is visible to the application layer 107 for read and write requests.

A third category of logical tables includes tables include an initial data set, for example, as part of the base data, but are often modified by customer enterprises. These logical tables can be represented using table inheritance, for example, as described herein. An example of such a logical table is represented by the shared table 322. The database management application 104 may initially represent the table by providing a projection view 316 of the shared table 322. After a user requests a modification to the table, the database management application 104 may represent the table to the application layer 107 as a virtual table 404 using a combination of the shared table 322 and a tenant delta table 406 (FIG. 4), for example, as described herein and illustrated with respect to FIG. 2.

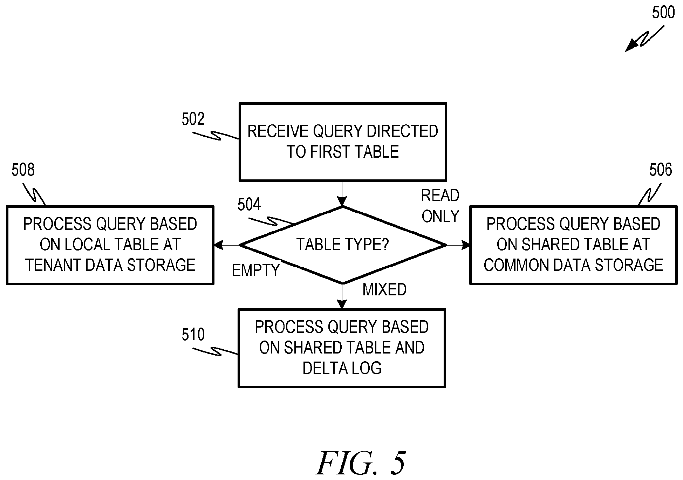

FIG. 5 is a flowchart showing one example of a process flow 500 that may be executed in the arrangement 300 to handle a query from the application layer 107. At operation 502, the database management application 104 may receive a query from the application layer 107 that is directed to a logical table. At operation 504, the database management application 104 may determine a table type of the logical table. If the table type is a read only table, then the database management application 104 may, at operation 506, process the query using a corresponding shared table at the common storage 118. For example, the database management application 104 may respond to the query using a projection view of the shared table.

If the logical table is an initially empty table, the database management application 104 may, at operation 508, process the query based on a local table stored at the tenant data storage 308. If the query is the first modification to the logical table, then the database management application 104 may, at operation 510, utilize a corresponding shared table from the common storage 118. The database management application 104 may store the template at the tenant storage 308 and write the query to the template so as to generate the local table stored at the tenant data storage 308. If the query is not the first modification to the logical table, then the database management application 104 may respond to the query using a tenant table that corresponds to the logical table.

If the logical table is represented using table inheritance, then the database management application 104 may process the query using a shared table at the common storage 118 and a corresponding tenant delta table at the tenant storage 308, for example, as described herein.

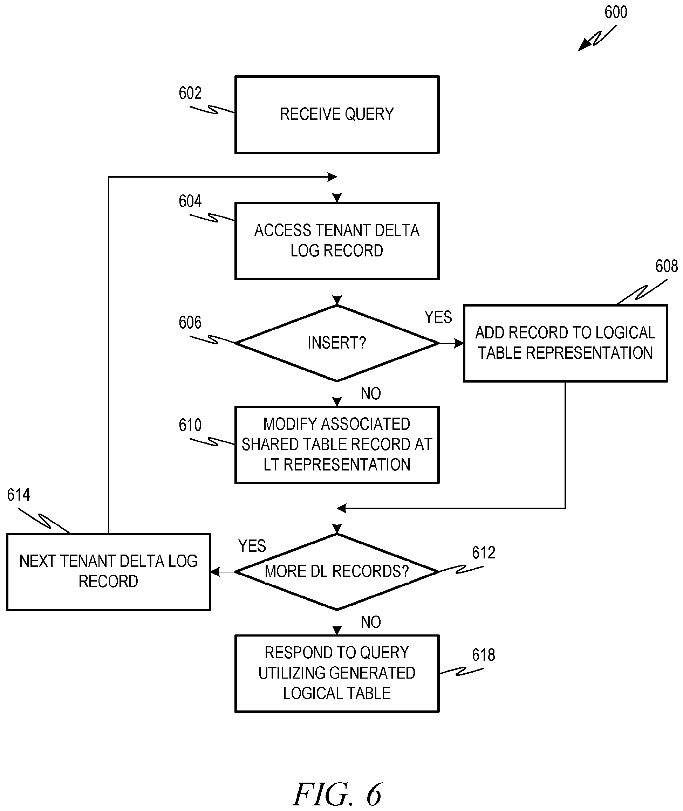

FIG. 6 is a flowchart showing one example of a process flow 600 that may be executed by a database management application, such as the database management application 104, to respond to a query directed to a logical table represented using table inheritance. In some examples, the process flow 600 may be used to respond to Data Manipulation Language (DML) type queries that insert, update, and/or delete data at one or more logical tables. At operation 602, the database management application 104 receives a query directed to a logical table represented using table inheritance.

The database management application 104 may construct a representation of logical table, in whole or in part, using a shared table corresponding to the logical table and a tenant delta table corresponding to the logical table and to the tenant originating the query. For example, the database management application 104 may, at operation 604, accesses a tenant delta table record. At operation 606, the database management application 104 may determine if the tenant delta table record indicates an insertion. The tenant delta table record may indicate an insertion, for example, at the field corresponding to the status column of the tenant delta table. If the tenant delta table record indicates an insertion, the database management application 104 may add a record corresponding to the tenant delta table record to the logical table representation at operation 608.

If the tenant delta table record does not indicate an insertion, it may, for example, indicate a modification or a deletion. Accordingly, the database management application 104 may, at operation 610, modify a record of the shared table associated with the tenant delta table record at the logical table representation. The record at the shared table associated with the tenant delta table record may be determined utilizing a key. For example, a key value at the tenant delta table record may match a key value of the corresponding record at the shared table. Modifying the shared table record may include, for example, deleting the shared table record (e.g. by omitting the shared table record from the logical table representation) or modifying the shared table record (by substituting the shared table record with all or part of the tenant delta table record).

After operation 608 or operation 610, the database management application 104 may, at operation 612, determine if it is to consider additional tenant delta table records. In some examples, the database management application 104 is configured to consider all tenant delta table records. Accordingly, operation 612 may comprise determining whether there are additional tenant delta table records that have not yet been considered. In other examples, the database management application 104 is the query. Accordingly, operation 612 may comprise determining whether the logical table representation is sufficient to respond to the query.

If the database management application 104 is to consider additional tenant delta table records, then the database management application 104 may move to the next tenant delta table record at operation 614 and return to operation 604. If the database management application 104 is not to consider any additional tenant delta table records, then it may, at operation 618, generate a response to the query using the generated logical table representation. The query response may be returned to the application layer 107.

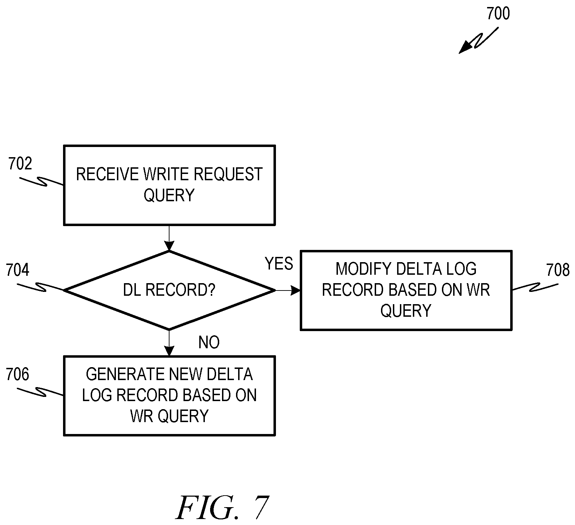

FIG. 7 is a flowchart showing one example of a process flow 700 that may be executed by a database management application, such as the database management application 104, to respond to a query including a write request directed to a logical table managed using table inheritance. At operation 702, the database management application receives a write request query directed to a logical table. The write request query is a query that requests a change to the logical table such as, for example, the addition of a record to the table, the deletion of a record from the table, or a modification to a record from the table.

At operation 704, the database management application 104 determines if the write request implicates a record from the logical table that is already represented by a corresponding tenant delta table record at a tenant delta table corresponding to the logical table. For example, the database management application 104 may identify one or more records at the logical table that are to be modified in response to the write request query. The record or records from the logical table may be identified using their key. The database management application 104 may then review the tenant delta table associated with the logical table to determine if it includes any records referencing the same key.

If the tenant delta table already includes a record corresponding to the logical table record to be modified, the database management application 104 may, at operation 708, implement the modification by modifying the identified tenant delta table record. Consider an example in which the modification includes modifying one or more fields. The database management application 104 may write data from and/or derived from the query to one or more fields of the tenant delta table record. If the status field of the tenant delta table record indicates a change other than modification, the database management application 104 may also update the status field to indicate modification. Consider another example in which the modification includes deleting the record from the logical table. In this example, the database management application 104 may modify the status field of the tenant delta table record to indicate deletion. In some examples, the database management application 104 may delete the existing tenant delta table record corresponding to the logical table record and write a new tenant delta table record indicating deletion. Also, in some examples, the database management application 104 may verify that the corresponding logical table record also exists at the shared table. If the corresponding logical table record does not exist at the shared table, the database management application 104 may delete the existing tenant delta table record and take no further action.

If the tenant delta table does not already include a record corresponding to the logical table record to be modified, the database management application 104 may generate a new tenant delta table record based on the query at operation 706. Consider an example in which the logical table record to be modified is to be deleted. The database management application 104 may generate a new tenant delta table record with a status field value indicating deletion and a key field value indicating the key of the logical table record to be modified. Consider another example in which the logical table record to be modified is to have data at one or more fields modified. The database management application 104 may generate a new tenant delta table record with a status field value indicating data modification, a key field value indicating the key of the logical table record to be modified, and other field values reflecting the modified data for the record.

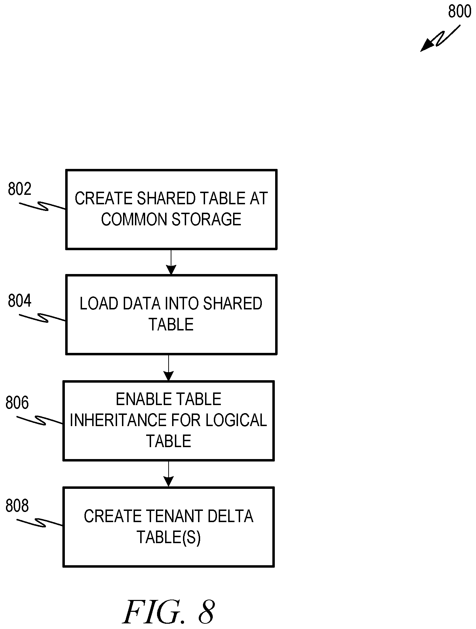

FIG. 8 is a flowchart showing one example of a process flow 800 that may be executed by a database management application, such as the database management application 104, to implement table inheritance. For example, the process flow 800 shows one example way that the database management application 104 may set up a logical table using table inheritance.

At operation 802, the database management application 104 may create a shared table corresponding to the logical table at the common storage 118. As described herein, the common storage 118 may be implemented at a tenancy that is accessible to the other tenancies (e.g., via the database management application 104). At operation 804, the database management application 104 may load data into the shared table. The data loaded into the shared table may be, for example, base data as described herein.

At operation 806, the database management may enable table inheritance for the logical table. This may include enabling the database management application 104 to generate one or more tenant delta tables corresponding to the shared table. It may also include enabling the database management application to respond to queries against the logical table using the shared table generated at operation 804 and a tenant delta table stored at the tenant storage of the originating tenant for the query.

In some examples, enabling table inheritance for the logical table may also include generating unique identifier for the shared table and configuring the database management application 104 to store an indication of the unique identifier with each tenant delta table generated at respective tenant storages. The unique identifier for the shared table may be generated based on the content of the shared table, for example, utilizing a hash or similar function. For example, if the shared table corresponding to a logical table is modified at the common storage, tenant delta tables generated premised on the unmodified shared table may no longer be valid. Accordingly, the database management application 104 may match the unique identifier from a tenant delta table with the unique identifier determined from the shared table before answering a query using the tenant delta table and shared data. If the unique identifier does not match, the database management application 104 may return an error or otherwise decline to respond to the query.

At operation 808, the database management application 104 may create one or more tenant delta tables corresponding to the logical table and the shared table generated at operations 802 and 804. The respective tenant delta tables may be used, for example, as described herein to respond to tenant queries directed to the logical table.

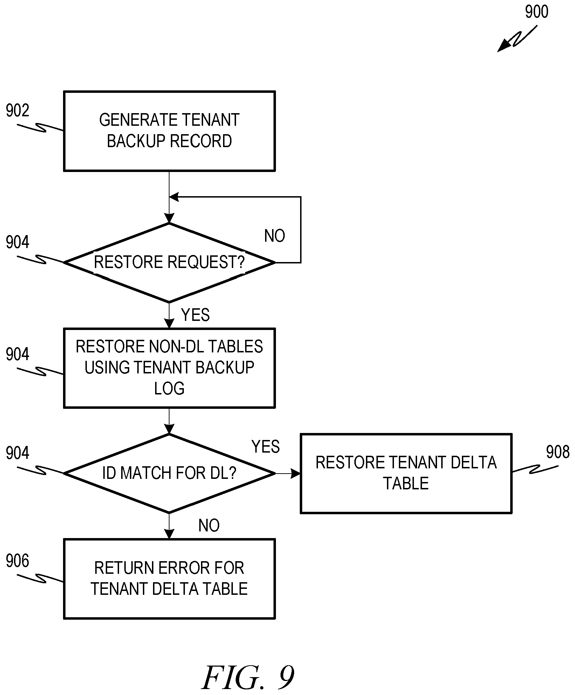

FIG. 9 is a flowchart showing one example of a process flow 900 that may be executed by the database management application 104 or another suitable application to restore a tenant storage including one or more tenant delta tables. For example, the process flow 900 may be utilized upon the failure of a tenant storage and/or as part of a migration of a tenant storage.

At operation 902, the database management application 104 may generate a tenant backup record. The tenant backup record includes a backup of data stored at the corresponding tenant storage. At operation 904, the database management application 104 may determine if it has received a restore request. If the database management application receives a restore request, it may restore tables from the tenant storage that are not tenant delta tables at operation 904 using the tenant backup record.

At operation 904, for each tenant delta table indicated by the tenant backup record, the database management application 104 may determine whether the unique identifier associated with the tenant backup record matches a unique identifier of the corresponding shared table at the common storage. The corresponding shared table may be the shared table corresponding to the same logical table as the tenant delta table. If the unique identifier for a tenant delta table matches the unique identifier of the corresponding shared table, then the database management application 104 may restore the tenant delta table using the tenant backup record at operation 908. If the unique identifier for a tenant delta table does not match the unique identifier of the corresponding shared table, then the database management application may return an error for that shared table at operation 906.

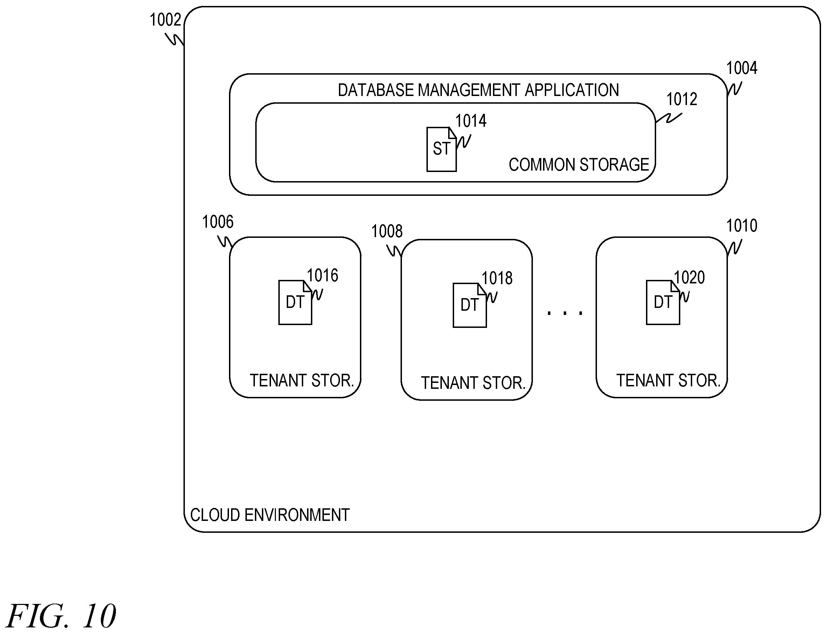

FIG. 10 is a diagram showing one example of a cloud environment 1002 demonstrating a single shared table 1014 that is associated with corresponding tenant delta tables 1016, 1018, 1020 at different respective tenants. The cloud environment 1002 may be similar to the cloud environment 102. In the example of FIG. 10, the cloud environment 1002 includes a database management application 1004 which may operate in a manner similar to that of the database management application 104. The database management application 1004 accesses a common storage 1012 which may be similar to the common storage 118. The cloud environment 1002 may also support multiple tenancies. The example of FIG. 10 shows tenant storages 1006, 1008, 1010 associated with three different tenancies. The tenant storage 1006 includes a tenant delta table 1016. The tenant storage 1008 includes a tenant delta table 1018. The tenant storage 1010 includes a tenant delta table 1020.

In various examples each of the tenant delta tables 1016, 1018, 1020 are associated with the same shared table 1014 at the common storage 1012. The database management application 1004 may be configured to respond to queries using the shared table 1014 and the particular tenant delta table 1016, 1018, 1020 corresponding to the tenant from which the query originated.

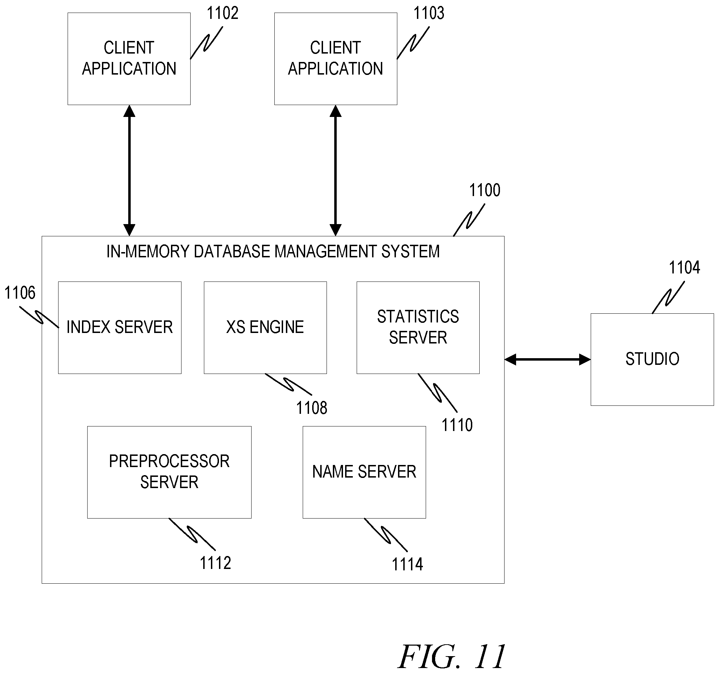

FIG. 11 is a diagram illustrating an example of an in-memory database management application 1100. In some examples, the in-memory database management application 1100 may be configured to implement table inheritance, for example, as described herein. An in-memory database stores data primarily at main memory, such as a random access memory. This is different than databases that primarily employ a disk storage mechanism. In some examples, the database management application 1100 may be or include an example of the HANA system from SAP SE of Walldorf, Germany.

The in-memory database management application 1100 may be coupled to one or more client applications 1102, 1103, which may be ERP applications as described herein. The client applications 1102, 1103 may communicate with the in-memory database management application 1100 through a number of different protocols, including Structured Query Language (SQL), Multidimensional Expressions (MDX), Hypertext Transfer Protocol (HTTP), Representational State Transfer (REST), Hypertext Markup Language (HTML).

FIG. 11 also shows a studio 1104 that may be used to perform modeling by accessing the in-memory database management application 1100. In some examples, the studio 1104 may allow complex analysis to be performed on data drawn not only from real time event data and windows, but also from stored database information. In some examples, carbon footprint data may be generated by the studio as described herein.

The in-memory database management application 1100 may comprise a number of different components, including an index server 1106, an XS engine 1108, a statistics server 1110, a preprocessor server 1112, and a name server 1114. These components may operate on a single computing device or may be spread among multiple computing devices (e.g., separate servers). The index server 1106 contains the actual data and the engines for processing the data. It may also coordinate and uses the other servers.

The XS engine 1108 allows clients to connect to the in-memory database management application 1100 using web protocols, such as Hypertext Transfer Protocol (HTTP). Although the XS engine 1108 is illustrated as a component of the in-memory database management application 1100, in some examples, the XS engine may be implemented as one or more Application Program Interfaces (APIs) and/or services positioned between the client applications 1102, 1103 and the in-memory database management application 1100. In some examples, the XS engine 1108 may handle client requests received in languages other than SQL such as, for example, Multidimensional Expressions (MDX), Hypertext Transfer Protocol (HTTP), Representational State Transfer (REST), Hypertext Markup Language (HTML), etc.

The statistics server 1110 collects information about status, performance, and resource consumption from all the other server components. The statistics server 1110 can be accessed from the studio 1104 to obtain the status of various alert monitors.

The preprocessor server 1112 is used for analyzing text data and extracting the information on which the text search capabilities are based.

The name server 1114 holds information about the database topology. This is used in a distributed system with instances of the database on different hosts. The name server 1114 knows where the components are running and which data is located on which server. In an example embodiment, a separate enqueue server may operate in the manner described above with respect to enqueue servers, specifically with regard to creating and managing lightweight enqueue sessions.

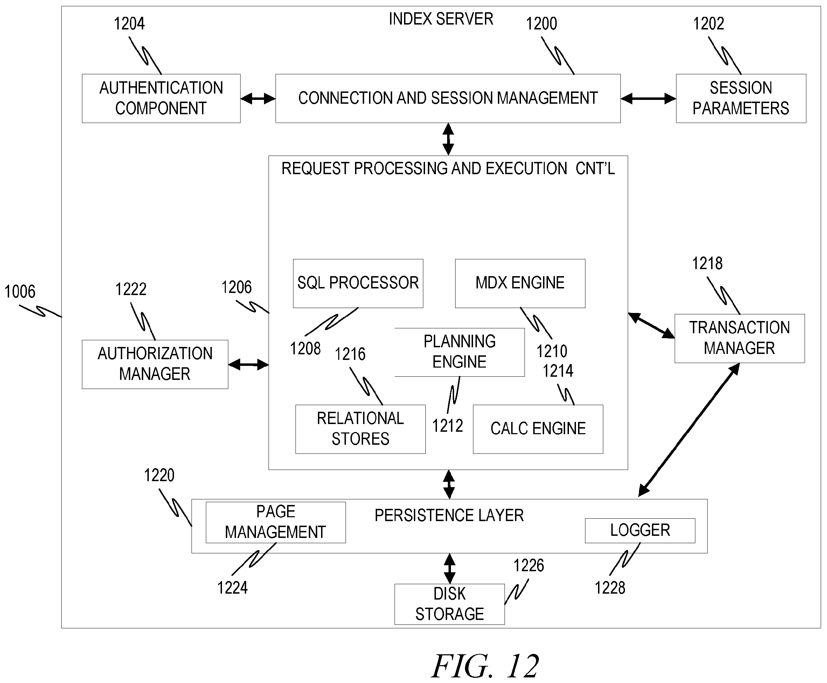

FIG. 12 is a diagram illustrating an example of the index server 1106. Specifically, the index server 1106 of FIG. 11 is depicted in more detail. The index server 1106 includes a connection and session management component 1200, which is responsible for creating and managing sessions and connections for the database clients (e.g. client applications 1102, 1103). Once a session is established, clients can communicate with the database system using SQL statements. For each session, a set of session parameters 1202 may be maintained, such as auto-commit, current transaction isolation level, etc. Users (e.g., system administrators, developers) may be authenticated by the database system itself (e.g., by logging in with log-in information such as a user name and password, using an authentication component 1204) or authentication can be delegated to an external authentication provider such as a Lightweight Directory Access Protocol (LDAP) directory.

Client requests, can be analyzed and executed by a set of components summarized as request processing and execution control 1206. An SQL processor 1208 checks the syntax and semantics of the client SQL statements and generates a logical execution plan. Multidimensional expressions (MDX) is a language for querying and manipulating multidimensional data stored in OLAP cubes. As such, an MDX engine 1210 may be provided to allow for the parsing and executing of MDX commands. A planning engine 1212 allows applications to execute basic planning operations in the database layer. One such operation is to create a new version of a dataset as a copy of an existing dataset, while applying filters and transformations.

A calculation engine 1214 implements the various SQL script and planning operations. The calculation engine 1214 creates a logical execution plan for calculation models derived from SQL script, MDX, planning, and domain-specific models. This logical execution plan may include, for example, breaking up a model into operations that can be processed in parallel. The data is stored in relational stores 1216, which implement a relational database in main memory. If the query is directed to a table using table inheritance, for example, as described herein, the execution plan may include accessing a shared table and a tenant delta table specific to the originating tenant, for example, as described herein. Each SQL statement may be processed in the context of a transaction. New sessions are implicitly assigned to a new transaction. A transaction manager 1218 coordinates database transactions, controls transactional isolation, and keeps track of running and closed transactions. When a transaction is committed or rolled back, the transaction manager 1218 informs the involved engines about this event so they can execute needed actions. The transaction manager 1218 also cooperates with a persistence layer 1220 to achieve atomic and durable transactions.

In some examples, the calculation engine 1214 is configured to plan a query response directed to a logical table that is represented by both a share table and a tenant delta table. For example, the calculation engine 1214 may determine whether to generate a full representation of the logical table from the share table and the tenant delta table or whether the query can be answered logical table.

An authorization manager 1222 is invoked by other database system components to check whether the user has the specified privileges to execute the requested operations. The database system allows for the granting of privileges to users or roles. A privilege grants the right to perform a specified operation on a specified object.

The persistence layer 1220 ensures that the database is restored to the most recent committed state after a restart and that transactions are either completely executed or completely undone. To achieve this goal in an efficient way, the persistence layer 1220 uses a combination of write-ahead logs, shadow paging, and save points. The persistence layer 1220 also offers a page management interface 1224 for writing and reading data to a separate disk storage 1226, and also contains a logger 1228 that manages the transaction log. Log entries can be written implicitly by the persistence layer 1220 when data is written via the persistence interface or explicitly by using a log interface.

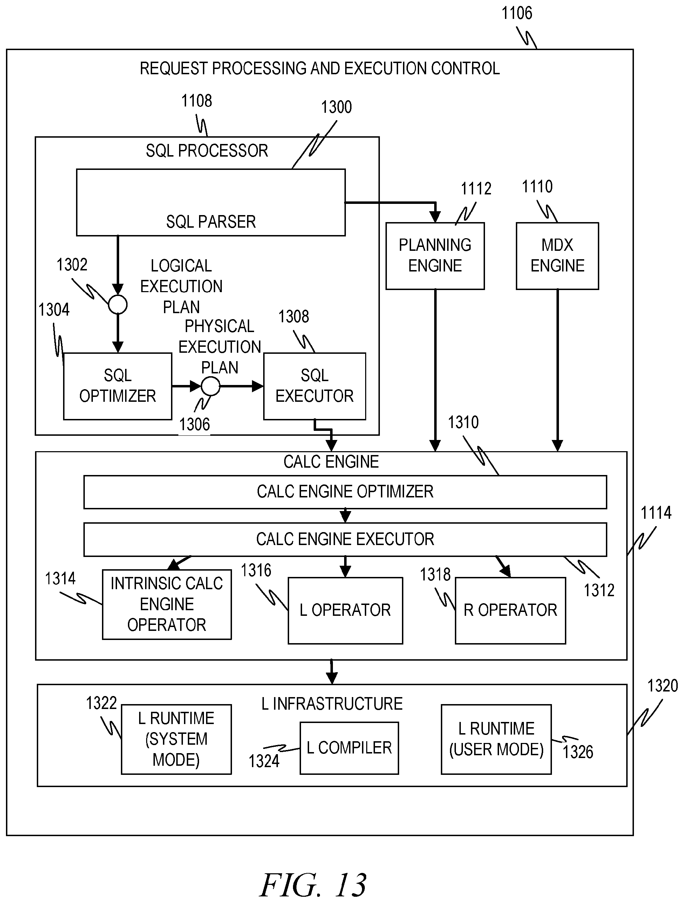

FIG. 13 is a diagram illustrating one example of the request processing and execution control 1206. This diagram depicts the request processing and execution control 1206 of FIG. 12 in more detail. The SQL processor 1208 contains an SQL parser 1300, which parses the SQL statement and generates a logical execution plan 1302, which it passes to an SQL optimizer 1304. The SQL optimizer 1304 optimizes the logical execution plan 1302 and converts it to a physical execution plan 1306, which it then passes to a SQL executor 1308. The calculation engine 1214 implements the various SQL script and planning operations, and includes a calc engine optimizer 1310, which optimizes the operations, and a calc engine executor 1312, which executes the operations, as well as an intrinsic calc engine operator 1314, an L operator 1316, and an R operator 1318.

An L infrastructure 1320 includes a number of components to aid in the running of L procedures, including an L-runtime (system mode) 1322, an L compiler 1324, and an L-runtime (User mode) 1326.

In view of the disclosure above, various examples are set forth below. It should be noted that one or more features of an example, taken in isolation or combination, should be considered within the disclosure of this application.

### Examples:

Example 1 is a system for managing a database in a multi-tenant cloud environment, the system comprising at least one processor programmed to perform operations comprising: receiving, by a database management application, a first query directed to a first table, the first query being received from a cloud application associated with a first tenant of the multi-tenant cloud environment; accessing, by the database management application, a first shared table associated with the first table and stored at a common storage of the multi-tenant cloud environment; accessing, by the database management application and from a first tenant data storage associated with the first tenant, a first tenant delta table associated with the first table; generating, by the database management application, a first query response, the first query response being based at least in part on the first query, the first shared table and the first tenant delta table; and responding, by the database management application, to the first query using the first query response.

In Example 2, the subject matter of Example 1 optionally includes the operations further comprising before accessing the first tenant delta table associated with the first table, determining that at least one previous query associated with the first tenant resulted in a modification to the first table.

In Example 3, the subject matter of any one or more of Examples 1-2 optionally include the operations further comprising: receiving, by the database management application a second query directed to a second table, the second query being received from the cloud application associated with the first tenant of the multi-tenant cloud environment; accessing, by the database management application, a second shared table stored at the common storage of the multi-tenant cloud environment; determining, by the database management application, that the first tenant has not previously modified the second table; generating, by the database management application, a second query response, the second query response being based at least in part on the second query and the second shared table; and responding, by the database management application, to the second query using the second query response.

In Example 4, the subject matter of Example 3 optionally includes the operations further comprising generating a projection view of the second shared table, the generating of the second query response being based at least in part on the projection view of the second shared table.

In Example 5, the subject matter of any one or more of Examples 1-4 optionally include the operations further comprising: receiving, by the database management application, a third query directed to a third table, the third query being received from the cloud application associated with the first tenant of the multi-tenant cloud environment; determining, by the database management application, that the third table is a read-only table; accessing, by the database management application, a third shared table stored at the common storage of the multi-tenant cloud environment; generating, by the database management application, a third query response, the third query response being based at least in part on the third query and the third shared table; and responding, by the database management application, to the third query using the third query response.

In Example 6, the subject matter of any one or more of Examples 1-5 optionally include the operations further comprising: receiving, by the database management application, a fourth query directed to a fourth table, the fourth query being received from the cloud application associated with the first tenant of the multi-tenant cloud environment, the fourth query requesting that a record be inserted to the fourth table; accessing, by the database management application, a fourth common table from the common storage of the multi-tenant cloud environment; and generating the fourth table, by the database management application and at the tenant data storage, the generating of the fourth table being based at least in part on the fourth common table and the fourth query.

In Example 7, the subject matter of any one or more of Examples 1-6 optionally include the operations further comprising: generating, by the database management application, a representation of the first table using the first shared table and the first tenant delta table; and executing, by the database management application, the first query against the representation of the first table.

In Example 8, the subject matter of Example 7 optionally includes the first shared table comprising a plurality of columns and the first tenant delta table comprising a plurality of columns corresponding to the plurality of columns of the first shared table and a status column, the operations further comprising, accessing a first record of the first tenant delta table, the first record of the first tenant delta table referring to a first record of the first shared table and a status column value of the first record indicating deletion of the first record, the generating of the representation of the first table comprising omitting the first record from the representation of the first table.

In Example 9, the subject matter of any one or more of Examples 7-8 optionally include the first shared table comprising a plurality of columns and the first tenant delta table comprising a plurality of columns corresponding to the plurality of columns of the first shared table and a status column, the operations further comprising, accessing a second record of the first tenant delta table, the second record of the first tenant delta table referring to a second record of the first shared table and a status column value of the second record indicating a modification to the second record, the generating of the representation of the first table comprising modifying the second record of the first shared table based at least in part on the second record of the first tenant delta table.

In Example 10, the subject matter of any one or more of Examples 1-9 optionally include the first tenant delta table being associated with identifier data referencing the first shared table, the operations further comprising: receiving, by the database management application, a request to restore the first tenant; accessing a backup record associated with the first tenant, the backup record comprising data describing the first shared table and the identifier data; querying the common storage to retrieve common storage identifier data describing the first shared table; determining that the common storage identifier data matches the identifier data; and restoring the first tenant delta table.

Example 11 is a method of managing a database in a multi-tenant cloud environment, the method comprising: receiving, by a database management application, a first query directed to a first table, the first query being received from a cloud application associated with a first tenant of the multi-tenant cloud environment; accessing, by the database management application, a first shared table associated with the first table and stored at a common storage of the multi-tenant cloud environment; accessing, by the database management application and from a first tenant data storage associated with the first tenant, a first tenant delta table associated with the first table; generating, by the database management application, a first query response, the first query response being based at least in part on the first query, the first shared table and the first tenant delta table; and responding, by the database management application, to the first query using the first query response.

In Example 12, the subject matter of Example 11 optionally includes before accessing the first tenant delta table associated with the first table, determining that at least one previous query associated with the first tenant resulted in a modification to the first table.

In Example 13, the subject matter of any one or more of Examples 11-12 optionally include receiving, by the database management application a second query directed to a second table, the second query being received from the cloud application associated with the first tenant of the multi-tenant cloud environment; accessing, by the database management application, a second shared table stored at the common storage of the multi-tenant cloud environment; determining, by the database management application, that the first tenant has not previously modified the second table; generating, by the database management application, a second query response, the second query response being based at least in part on the second query and the second shared table; and responding, by the database management application, to the second query using the second query response.

In Example 14, the subject matter of Example 13 optionally includes generating a projection view of the second shared table, the generating of the second query response being based at least in part on the projection view of the second shared table.

In Example 15, the subject matter of any one or more of Examples 11-14 optionally include receiving, by the database management application, a third query directed to a third table, the third query being received from the cloud application associated with the first tenant of the multi-tenant cloud environment; determining, by the database management application, that the third table is a read-only table; accessing, by the database management application, a third shared table stored at the common storage of the multi-tenant cloud environment; generating, by the database management application, a third query response, the third query response being based at least in part on the third query and the third shared table; and responding, by the database management application, to the third query using the third query response.

In Example 16, the subject matter of any one or more of Examples 11-15 optionally include receiving, by the database management application, a fourth query directed to a fourth table, the fourth query being received from the cloud application associated with the first tenant of the multi-tenant cloud environment, the fourth query requesting that a record be inserted to the fourth table; accessing, by the database management application, a fourth common table from the common storage of the multi-tenant cloud environment; and generating the fourth table, by the database management application and at the tenant data storage, the generating of the fourth table being based at least in part on the fourth common table and the fourth query.

In Example 17, the subject matter of any one or more of Examples 11-16 optionally include generating, by the database management application, a representation of the first table using the first shared table and the first tenant delta table; and executing, by the database management application, the first query against the representation of the first table.

In Example 18, the subject matter of Example 17 optionally includes the first shared table comprising a plurality of columns and the first tenant delta table comprising a plurality of columns corresponding to the plurality of columns of the first shared table and a status column, the method further comprising, accessing a first record of the first tenant delta table, the first record of the first tenant delta table referring to a first record of the first shared table and a status column value of the first record indicating deletion of the first record, the generating of the representation of the first table comprising omitting the first record from the representation of the first table.

In Example 19, the subject matter of any one or more of Examples 11-18 optionally include the first tenant delta table being associated with identifier data referencing the first shared table, the method further comprising: receiving, by the database management application, a request to restore the first tenant; accessing a backup record associated with the first tenant, the backup record comprising data describing the first shared table and the identifier data; querying the common storage to retrieve common storage identifier data describing the first shared table; determining that the common storage identifier data matches the identifier data; and restoring the first tenant delta table.

Example 20 is a non-transitory machine-readable medium comprising instructions thereon that, when executed by at least one processor, because the at least one processor to perform operations comprising: receiving, by a database management application, a first query directed to a first table, the first query being received from a cloud application associated with a first tenant of a multi-tenant cloud environment; accessing, by the database management application, a first shared table associated with the first table and stored at a common storage of the multi-tenant cloud environment; accessing, by the database management application and from a first tenant data storage associated with the first tenant, a first tenant delta table associated with the first table; generating, by the database management application, a first query response, the first query response being based at least in part on the first query, the first shared table and the first tenant delta table; and responding, by the database management application, to the first query using the first query response.

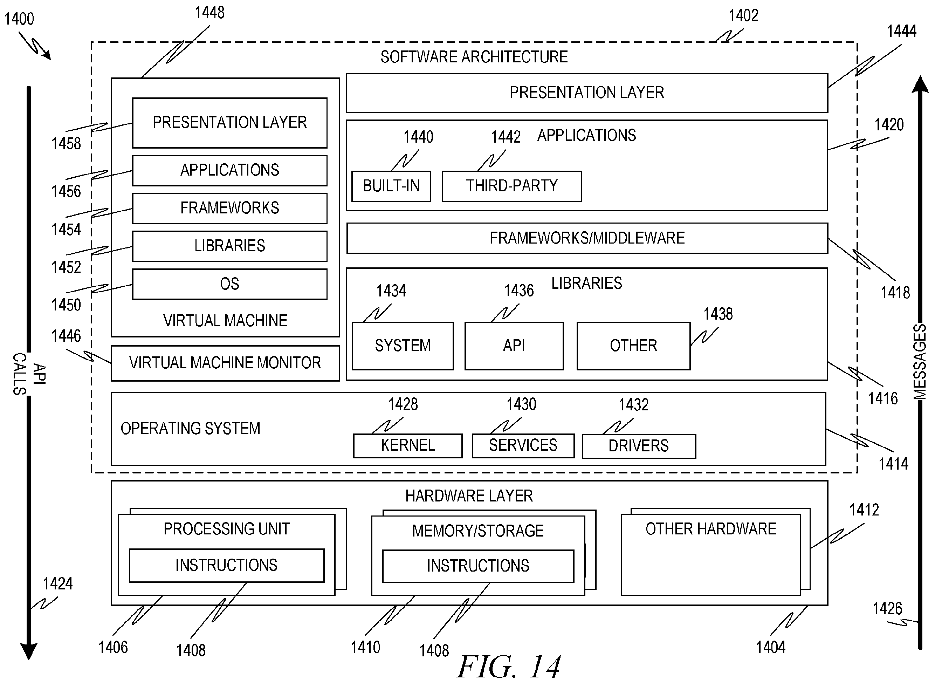

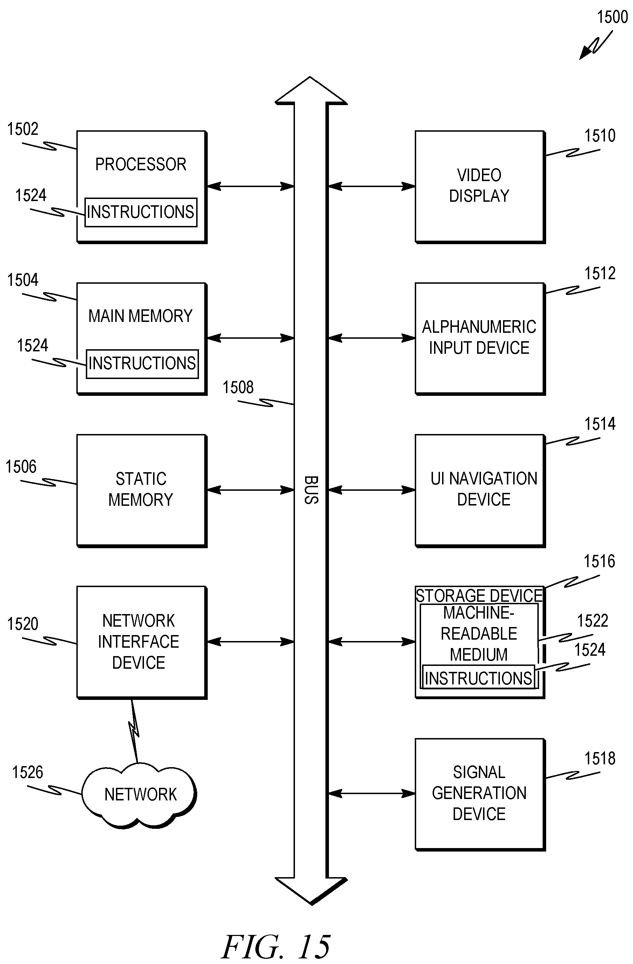

FIG. 14 is a block diagram 1400 showing one example of a software architecture 1402 for a computing device. The architecture 1402 may be used in conjunction with various hardware architectures, for example, as described herein. FIG. 14 is merely a non-limiting example of a software architecture and many other architectures may be implemented to facilitate the functionality described herein. A representative hardware layer 1404 is illustrated and can represent, for example, any of the above referenced computing devices. In some examples, the hardware layer 1404 may be implemented according to the architecture of the computer system of FIG. 15.

The representative hardware layer 1404 comprises one or more processing units 1406 having associated executable instructions 1408. Executable instructions 1408 represent the executable instructions of the software architecture 1402, including implementation of the methods, modules, subsystems, and components, and so forth described herein, and may also include memory and/or storage modules 1410, which also have executable instructions 1408. Hardware layer 1404 may also comprise other hardware as indicated by other hardware 1412 which represents any other hardware of the hardware layer 1404, such as the other hardware illustrated as part of the architecture 1402.

In the example architecture of FIG. 14, the software architecture 1402 may be conceptualized as a stack of layers where each layer provides particular functionality. For example, the software architecture 1402 may include layers such as an operating system 1414, libraries 1416, middleware layer 1418, applications 1420, and presentation layer 1444. Operationally, the applications 1420 and/or other components within the layers may invoke API calls 1424 through the software stack and access a response, returned values, and so forth illustrated as messages 1426 in response to the API calls 1424. The layers illustrated are representative in nature and not all software architectures have all layers. For example, some mobile or special purpose operating systems may not provide a middleware layer 1418, while others may provide such a layer. Other software architectures may include additional or different layers.

The operating system 1414 may manage hardware resources and provide common services. The operating system 1414 may include, for example, a kernel 1428, services 1430, and drivers 1432. The kernel 1428 may act as an abstraction layer between the hardware and the other software layers. For example, the kernel 1428 may be responsible for memory management, processor management (e.g., scheduling), component management, networking, security settings, and so on. The services 1430 may provide other common services for the other software layers. In some examples, the services 1430 include an interrupt service. The interrupt service may detect the receipt of an interrupt and, in response, cause the architecture 1402 to pause its current processing and execute an interrupt service routine (ISR) when an interrupt is accessed.

The drivers 1432 may be responsible for controlling or interfacing with the underlying hardware. For instance, the drivers 1432 may include display drivers, camera drivers, Bluetooth^{®} drivers, flash memory drivers, serial communication drivers (e.g., Universal Serial Bus (USB) drivers), Wi-Fi^{®} drivers, NFC drivers, audio drivers, power management drivers, and so forth depending on the hardware configuration.

The libraries 1416 may provide a common infrastructure that may be utilized by the applications 1420 and/or other components and/or layers. The libraries 1416 typically provide functionality that allows other software modules to perform tasks in an easier fashion than to interface directly with the underlying operating system 1414 functionality (e.g., kernel 1428, services 1430 and/or drivers 1432). The libraries 1416 may include system 1434 libraries (e.g., C standard library) that may provide functions such as memory allocation functions, string manipulation functions, mathematic functions, and the like. In addition, the libraries 1416 may include API libraries 1436 such as media libraries (e.g., libraries to support presentation and manipulation of various media format such as MPEG4, H.264, MP3, AAC, AMR, JPG, PNG), graphics libraries (e.g., an OpenGL framework that may be used to render 2D and 3D in a graphic content on a display), database libraries (e.g., SQLite that may provide various relational database functions), web libraries (e.g., WebKit that may provide web browsing functionality), and the like. The libraries 1416 may also include a wide variety of other libraries 1438 to provide many other APIs to the applications 1420 and other software components/modules.

The middleware layer 1418 (also sometimes referred to as frameworks) may provide a higher-level common infrastructure that may be utilized by the applications 1420 and/or other software components/modules. For example, the middleware layer 1418 may provide various graphic user interface (GUI) functions, high-level resource management, high-level location services, and so forth. The middleware layer 1418 may provide a broad spectrum of other APIs that may be utilized by the applications 1420 and/or other software components/modules, some of which may be specific to a particular operating system or platform.

The applications 1420 include built-in applications 1440 and/or third-party applications 1442. Examples of representative built-in applications 1440 may include, but are not limited to, a contacts application, a browser application, a book reader application, a location application, a media application, a messaging application, and/or a game application. Third-party applications 1442 may include any of the built-in applications 1440 as well as a broad assortment of other applications. In a specific example, the third-party application 1442 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 1442 may invoke the API calls 1424 provided by the mobile operating system such as operating system 1414 to facilitate functionality described herein.

The applications 1420 may utilize built-in operating system functions (e.g., kernel 1428, services 1430 and/or drivers 1432), libraries (e.g., system 1434, API libraries 1436, and other libraries 1438), and middleware layer 1418 to create user interfaces to interact with users of the system. Alternatively, or additionally, in some systems interactions with a user may occur through a presentation layer, such as presentation layer 1444. In these systems, the application/module "logic" can be separated from the aspects of the application/module that interact with a user.

Some software architectures utilize virtual machines. In the example of FIG. 14, this is illustrated by virtual machine 1448. A virtual machine creates a software environment where applications/modules can execute as if they were executing on a hardware computing device. A virtual machine is hosted by a host operating system (operating system 1414) and typically, although not always, has a virtual machine monitor 1446, which manages the operation of the virtual machine 1448 as well as the interface with the host operating system (i.e., operating system 1414). A software architecture executes within the virtual machine 1448 such as an operating system 1450, libraries 1452, frameworks/middleware 1454, applications 1456 and/or presentation layer 1458. These layers of software architecture executing within the virtual machine 1448 can be the same as corresponding layers previously described or may be different.

### MODULES, COMPONENTS AND LOGIC

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. In example embodiments, one or more computer systems (e.g., a standalone, client, or server computer system) or one or more hardware processors may be configured by software (e.g., an application or application portion) as a hardware-implemented module that operates to perform certain operations as described herein.

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses that connect the hardware-implemented modules). In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment, or a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

### ELECTRONIC APPARATUS AND SYSTEM

Example embodiments may be implemented in digital electronic circuitry, or in computer hardware, firmware, or software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

FIG. 15 is a block diagram of a machine in the example form of a computer system 1500 within which instructions 1524 may be executed for causing the machine to perform any one or more of the methodologies discussed herein. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1500 includes a processor 1502 (e.g., a central processing unit (CPU), a graphics processing unit (GPU), or both), a main memory 1504, and a static memory 1506, which communicate with each other via a bus 1508. The computer system 1500 may further include a video display unit 1510 (e.g., a liquid crystal display (LCD) or a cathode ray tube (CRT)). The computer system 1500 also includes an alphanumeric input device 1512 (e.g., a keyboard or a touch-sensitive display screen), a user interface (UI) navigation (or cursor control) device 1514 (e.g., a mouse), a disk drive unit 1516, a signal generation device 1518 (e.g., a speaker), and a network interface device 1520.

### MACHINE-READABLE MEDIUM

The disk drive unit 1516 includes a machine-readable medium 1522 that may have stored thereon one or more sets of data structures and instructions 1524 (e.g., software) embodying or utilized by any one or more of the methodologies or functions described herein. The instructions 1524 may also reside, completely or at least partially, within the main memory 1504 and/or within the processor 1502 during execution thereof by the computer system 1500, with the main memory 1504 and the processor 1502 also constituting machine-readable media 1522.

While the machine-readable medium 1522 is shown in an example embodiment to be a single medium, the term "machine-readable medium" may include a single medium or multiple media (e.g., a centralized or distributed database, and/or associated caches and servers) that store the one or more instructions 1524 or data structures. The term "machine-readable medium" shall also be taken to include any tangible medium that is capable of storing, encoding, or carrying instructions 1524 for execution by the machine and that cause the machine to perform any one or more of the methodologies of the present disclosure, or that is capable of storing, encoding, or carrying data structures utilized by or associated with such instructions 1524. The term "machine-readable medium" shall accordingly be taken to include, but not be limited to, solid-state memories, and optical and magnetic media. Specific examples of machine-readable media 1522 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and CD-ROM and DVD-ROM disks.

### TRANSMISSION MEDIUM

The instructions 1524 may further be transmitted or received over a communications network 1526 using a transmission medium. The instructions 1524 may be transmitted using the network interface device 1520 and any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 1524 for execution by the machine, and includes digital or analog communications signals or other intangible media to facilitate communication of such software.

Although an embodiment has been described with reference to specific example embodiments, it will be evident that various modifications and changes may be made to these embodiments without departing from the broader spirit and scope of the disclosure. Accordingly, the specification and drawings are to be regarded in an illustrative rather than a restrictive sense. The accompanying drawings that form a part hereof show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system for managing a database in a multi-tenant cloud environment, the system comprising at least one processor programmed to perform operations comprising:
receiving, by a database management application, a first query directed to a first table, the first query being received from a cloud application associated with a first tenant of the multi-tenant cloud environment;
accessing, by the database management application, a first shared table associated with the first table and stored at a common storage of the multi-tenant cloud environment;
accessing, by the database management application and from a first tenant data storage associated with the first tenant, a first tenant delta table associated with the first table;
generating, by the database management application, a first query response, the first query response being based at least in part on the first query, the first shared table and the first tenant delta table; and
responding, by the database management application, to the first query using the first query response.

2. The system of claim 1, the operations further comprising before accessing the first tenant delta table associated with the first table, determining that at least one previous query associated with the first tenant resulted in a modification to the first table.

3. The system of claim 1 or 2, the operations further comprising:
receiving, by the database management application a second query directed to a second table, the second query being received from the cloud application associated with the first tenant of the multi-tenant cloud environment;
accessing, by the database management application, a second shared table stored at the common storage of the multi-tenant cloud environment;
determining, by the database management application, that the first tenant has not previously modified the second table;
generating, by the database management application, a second query response, the second query response being based at least in part on the second query and the second shared table; and
responding, by the database management application, to the second query using the second query response,
the operations optionally further comprising generating a projection view of the second shared table, the generating of the second query response optionally being based at least in part on the projection view of the second shared table.

4. The system of any one of claims 1 to 3, the operations further comprising:
receiving, by the database management application, a third query directed to a third table, the third query being received from the cloud application associated with the first tenant of the multi-tenant cloud environment;
determining, by the database management application, that the third table is a read-only table;
accessing, by the database management application, a third shared table stored at the common storage of the multi-tenant cloud environment;
generating, by the database management application, a third query response, the third query response being based at least in part on the third query and the third shared table; and
responding, by the database management application, to the third query using the third query response; and/or
the operations further comprising:
receiving, by the database management application, a fourth query directed to a fourth table, the fourth query being received from the cloud application associated with the first tenant of the multi-tenant cloud environment, the fourth query requesting that a record be inserted to the fourth table;
accessing, by the database management application, a fourth common table from the common storage of the multi-tenant cloud environment; and
generating the fourth table, by the database management application and at the tenant data storage, the generating of the fourth table being based at least in part on the fourth common table and the fourth query.

5. The system of any one of claims 1 to 4, the operations further comprising:
generating, by the database management application, a representation of the first table using the first shared table and the first tenant delta table; and
executing, by the database management application, the first query against the representation of the first table.

6. The system of claim 5, the first shared table comprising a plurality of columns and the first tenant delta table comprising a plurality of columns corresponding to the plurality of columns of the first shared table and a status column, the operations further comprising, accessing a first record of the first tenant delta table, the first record of the first tenant delta table referring to a first record of the first shared table and a status column value of the first record indicating deletion of the first record, the generating of the representation of the first table comprising omitting the first record from the representation of the first table; and/or
the first shared table comprising a plurality of columns and the first tenant delta table comprising a plurality of columns corresponding to the plurality of columns of the first shared table and a status column, the operations further comprising, accessing a second record of the first tenant delta table, the second record of the first tenant delta table referring to a second record of the first shared table and a status column value of the second record indicating a modification to the second record, the generating of the representation of the first table comprising modifying the second record of the first shared table based at least in part on the second record of the first tenant delta table.

7. The system of any one of claims 1 to 6, the first tenant delta table being associated with identifier data referencing the first shared table, the operations further comprising:
receiving, by the database management application, a request to restore the first tenant;
accessing a backup record associated with the first tenant, the backup record comprising data describing the first shared table and the identifier data;
querying the common storage to retrieve common storage identifier data describing the first shared table;
determining that the common storage identifier data matches the identifier data; and
restoring the first tenant delta table.

8. A method of managing a database in a multi-tenant cloud environment, the method comprising:
receiving, by a database management application, a first query directed to a first table, the first query being received from a cloud application associated with a first tenant of the multi-tenant cloud environment;
accessing, by the database management application, a first shared table associated with the first table and stored at a common storage of the multi-tenant cloud environment;
accessing, by the database management application and from a first tenant data storage associated with the first tenant, a first tenant delta table associated with the first table;
generating, by the database management application, a first query response, the first query response being based at least in part on the first query, the first shared table and the first tenant delta table; and
responding, by the database management application, to the first query using the first query response.

9. The method of claim 8, further comprising before accessing the first tenant delta table associated with the first table, determining that at least one previous query associated with the first tenant resulted in a modification to the first table.

10. The method of claim 8 or 9, further comprising:
receiving, by the database management application a second query directed to a second table, the second query being received from the cloud application associated with the first tenant of the multi-tenant cloud environment;
accessing, by the database management application, a second shared table stored at the common storage of the multi-tenant cloud environment;
determining, by the database management application, that the first tenant has not previously modified the second table;
generating, by the database management application, a second query response, the second query response being based at least in part on the second query and the second shared table; and
responding, by the database management application, to the second query using the second query response,
the method optionally further comprising generating a projection view of the second shared table, the generating of the second query response optionally being based at least in part on the projection view of the second shared table.

11. The method of any one of claims 8 to 10, further comprising:
receiving, by the database management application, a third query directed to a third table, the third query being received from the cloud application associated with the first tenant of the multi-tenant cloud environment;
determining, by the database management application, that the third table is a read-only table;
accessing, by the database management application, a third shared table stored at the common storage of the multi-tenant cloud environment;
generating, by the database management application, a third query response, the third query response being based at least in part on the third query and the third shared table; and
responding, by the database management application, to the third query using the third query response.

12. The method of any one of claims 8 to 11, further comprising:
receiving, by the database management application, a fourth query directed to a fourth table, the fourth query being received from the cloud application associated with the first tenant of the multi-tenant cloud environment, the fourth query requesting that a record be inserted to the fourth table;
accessing, by the database management application, a fourth common table from the common storage of the multi-tenant cloud environment; and
generating the fourth table, by the database management application and at the tenant data storage, the generating of the fourth table being based at least in part on the fourth common table and the fourth query.

13. The method of any one of claims 8 to 12, further comprising:
generating, by the database management application, a representation of the first table using the first shared table and the first tenant delta table; and
executing, by the database management application, the first query against the representation of the first table,
the first shared table optionally comprising a plurality of columns and the first tenant delta table optionally comprising a plurality of columns corresponding to the plurality of columns of the first shared table and a status column, the method optionally further comprising, accessing a first record of the first tenant delta table, the first record of the first tenant delta table optionally referring to a first record of the first shared table and a status column value of the first record indicating deletion of the first record, the generating of the representation of the first table optionally comprising omitting the first record from the representation of the first table.

14. The method of any one of claims 8 to 13, the first tenant delta table being associated with identifier data referencing the first shared table, the method further comprising:
receiving, by the database management application, a request to restore the first tenant;
accessing a backup record associated with the first tenant, the backup record comprising data describing the first shared table and the identifier data;
querying the common storage to retrieve common storage identifier data describing the first shared table;
determining that the common storage identifier data matches the identifier data; and
restoring the first tenant delta table.

15. A non-transitory machine-readable medium comprising instructions thereon that, when executed by at least one processor, because the at least one processor to perform operations comprising:
receiving, by a database management application, a first query directed to a first table, the first query being received from a cloud application associated with a first tenant of a multi-tenant cloud environment;
accessing, by the database management application, a first shared table associated with the first table and stored at a common storage of the multi-tenant cloud environment;
accessing, by the database management application and from a first tenant data storage associated with the first tenant, a first tenant delta table associated with the first table;
generating, by the database management application, a first query response, the first query response being based at least in part on the first query, the first shared table and the first tenant delta table; and
responding, by the database management application, to the first query using the first query response.
